# EUROPEAN PATENT APPLICATION

(11) **EP 2 626 257 A2**
(43) Date of publication of application: **14.08.2013**
(21) Application number: 13368001.7
(22) Date of filing: 31.01.2013
(51) Int. Cl.: B60S 1/52, B60S 1/38

(54) **Pumped-drain and defrost windshield wiper system**

(30) Priority: 01.02.2012 US 201213364243; 14.09.2012 US 201213616624
(71) Applicant: Integrated Wiper Technologies LLC, Boynton Beach FL 33473 (US)
(72) Inventor: Jacobowitz, Lawrence, Boynton Beach, FL 33473 (US)
(74) Representative: Schuffenecker, Thierry

(57) **Abstract**

In a first main embodiment, a windshield wiper including: a housing including a blade mounted therein; at least one drain tube (12) including a plurality of inlets; and a coupler (11) for coupling the at least one drain tube to a pump. A system incorporating the windshield wiper and vehicles having the system installed are disclosed. In a second main embodiment, a windshield wiper having a unitary structure including: a blade with a spine (38) ; at least one drain (12) including a plurality of inlets, integrated with the blade such that the at least one drain is aligned with a flow path of precipitation guided up the blade sidewall. A coupler (11) for connects the at least one drain via tubing to a pump. A system incorporating the windshield wiper and vehicles having the system installed are disclosed.

## Description

### Technical field

The present invention relates to motor vehicles, and more particularly to improved windshield wiping methods and apparatus, and also to improved functionality and integration in windshield wiping methods, apparatus and design for manufacturability

### Background Art

For the many advances in automotive technology, there have been surprisingly few advances assuring visibility during precipitation driven by truly inclement weather. That is, since the invention of windshield wipers in 1903, over a century has passed without a solution that can provide users with adequate clearing of heavy rain, ice or snow. In order to provide some context, aspects of a prior art windshield wiper are introduced.

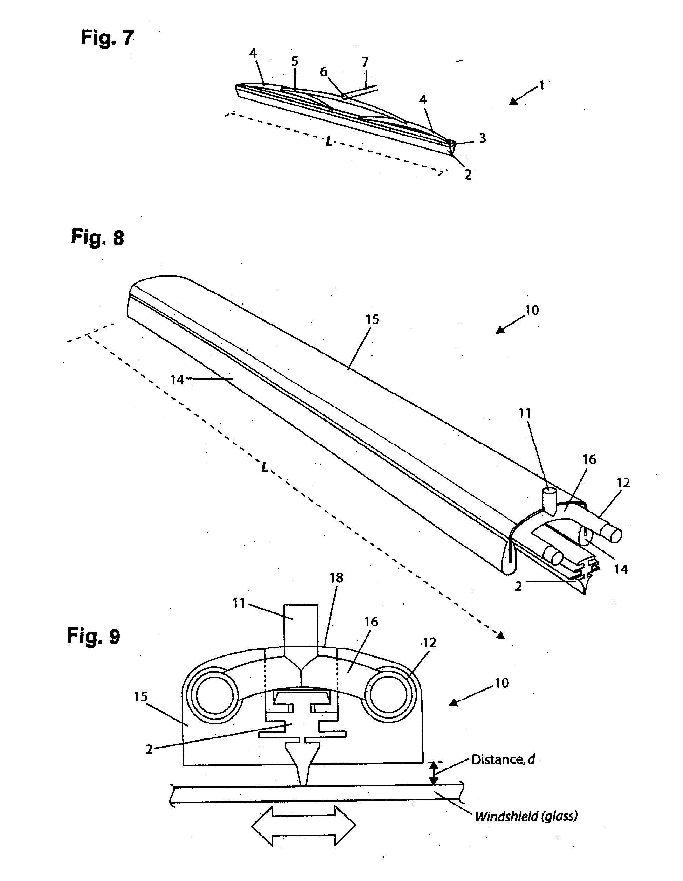

Referring to FIG. 7, there is shown a prior art windshield wiper 1. The prior art windshield wiper 1 includes a blade 2. The blade 2 is generally fabricated from rubber, a soft polymer or other similar material that provides for a "squeegee" action. That is, an action that sipes water away from an exterior surface of a windshield (i.e., expels water from the surface). The blade 2 is attached to a spine 3. The spine 3 provides a rigidity required to ensure downward pressure which is delivered through an arm 7 and upon the blade 2 is effectively communicated along a length, L, of the prior art windshield wiper 1. In common embodiments of the prior art windshield wiper 1, the pressure is evenly distributed through a suspension system that includes components such as at least one primary armature 4 and often a secondary armature 5. As is commonly recognized, the secondary armature 5 often includes a single coupling 6 for coupling of the prior art windshield wiper 1 to the arm 7. The arm 7 is driven by a motor and mechanical assembly (not shown) which provides for repetitive travel

Present day windshield wipers 1 are generally useful in limited to light rain and are often inadequate to handle a large volume of rain, such as during intense downpours. In intense rainstorms, wiper blades are unable to displace the high volumes of water. Generally, the wipers smear the rain into blurring sheets and create very limited visibility through the windshield. Increasing the speed of the traverse of the wiper has been useful, but this also causes limitations in visibility. Further, high speeds can cause excessive wear to a wiper system. These problems have been persistent in the auto industry for over a century. Other problems with present day windshield wipers 10 are known.

For example, while windshield defrosters can help in freezing weather, present day internal, in-cab, heated and fan blown air windshield defrosters are manifestly ineffective in melting ice deposited on surfaces of the prior art windshield wiper 1. Any one that has driven in icing weather recognizes that the glass windshield is a poor thermal conductor for heat transfer to the squeegee blade of the typical windshield wiper. At low ambient temperatures, ice forming on the various parts of the prior art windshield wiper 1 results in dangerously poor visibility for automobile, bus and truck drivers alike.

Various attempts have been made to address icing of wiper blades. Among these are designs that conduct heat to the wiper blade 2. However, efforts involving conduction heating are inefficient and generally ineffective. That is, as silicone rubbers and synthetic polymer equivalents used in wiper squeegees are good thermal insulators, the designs fail to perform as intended.

That is, the prior art has been unable to solve the problems associated with the thermal insulator property of flexible rubber or polymer windshield wiper blades. The thermodynamics of heat transfer are poorly realized in prior art implementations which teach embedding wires into channels opened into the thermally insulating wiper blade body. Considering the radiation emission pattern of a wire to be that of a cylindrical isotropic radiator, the majority of the heat energy is lost into directions not effective for melting ice on the blade-edge and sidewalls.

Some other efforts have addressed the thermal conductivity limitation by additions of carbon-based materials such as carbon-fibers or graphite or nanoparticle admixtures in the materials used in the blade 2. These solutions enhance thermal conductivity with an attendant increase in the cost of materials. Notably all polymer and rubber materials suffer diminished lifetimes resulting from conductive thermal cycling associated with heating and cooling of the blade.

Likewise, embedded resistive wires into the wiper blades (i.e., heating thermal insulators) reflects an attempt to overcome the fundamental physics involved. For the same reason, conduction heating of insulators is inappropriate. Heated windshield fluids through capillary tubes have been reported to have caused fires or burn injuries.

With the millions of drivers on the road today, and the frequent presentment of rain and snow hazards, an improved windshield wiper is of great need. The improvements should be cost effective, and be equipped to limit the impact of precipitation for the variety of inclement conditions that confront drivers around the world.

### Summary of the invention

One object of the disclosure is a vehicular rain removal system that significantly increases fluid flow-rate and maximum fluid-capacity, to overcome the failure-point limit of visibility.

Another object of the disclosure is a vehicular rain removal system which includes drain structures, which can be dynamically pumped with an adaptive flow-rate proportional to the intensity of rainfall.

Another object of the disclosure is to enable further increases in rain removal fluid capacity in coupled wiper pair configurations through sensor-based control circuits and selectable pump sharing configurations.

Another object of the disclosure is to enable increased operational reliability of a rain removal system comprised of a pair of wipers, in the event of a single pump failure.

A further object of the disclosure is improved manufacturability of a vehicular rain removal system.

Another object of the disclosure is improved thermodynamic efficiency for a heated wiper capable of defrosting ice and snow.

A further object of the disclosure is to teach design integration for functional maximization, providing a multiplicity of requisite utilities within a single wiper, including windshield washer cleaning fluid dispersal along the wiper blade.

These and other objects are achieved, in a first main embodiment, by a windshield wiper comprising a blade having a length, at least one drain having a plurality of inlets, with the drain formed adjacent to the blade and to the length, and a spine adjacent to the drain, wherein the blade, the drain, and the spine are a unitary structure.

These and other objects are further achieved by a system for removing precipitation from a windshield, comprising a windshield wiper made up of a blade having a length, at least one drain having a plurality of inlets, the drain formed adjacent to the blade and to the length, a spine adjacent to the drain, wherein the blade, drain, and spine are a unitary structure. The windshield wiper is mounted on a wiper arm, with at least one coupler for coupling the drain to tubing that leads to at least one pump that is capable of applying a negative pressure to the drain and pumping the precipitation from the drain via the tubing.

The above objects are still further achieved by a vehicle comprising a rain removal system for wiping a windshield, the vehicle including a windshield, and a windshield wiper having a blade with a length, at least one drain having a plurality of inlets, the drain formed adjacent to the blade and to the length, a spine adjacent to the drain, wherein the blade, the drain, and the spine are a unitary structure. The windshield wiper is mounted on a wiper arm, and there is further at least one coupler for coupling the drain to tubing that leads to at least one pump capable of applying a negative pressure to the drain and pumping the precipitation from the windshield. The windshield wiper is mounted to the vehicle for providing wiping of precipitation from the windshield during operation of the vehicle.

These objects are also achieved by a method of manufacturing a windshield wiper comprising forming a blade having a length, forming at least one drain having a plurality of inlets, the drain formed adjacent to the blade and to the length, wherein the blade and drain are formed in a single manufacturing step of a single material.

In a second main embodiment, the invention includes a windshield wiper including: a housing including a blade mounted therein; at least one drain tube including a plurality of inlets; and a coupler for coupling the at least one drain tube to tubing that leads to a pump.

In a another aspect of the second main embodiment, the invention includes a system for wiping a windshield, the system including: at least one windshield wiper including a housing with a blade mounted therein; at least one drain tube including a plurality of inlets; and a coupler for coupling the at least one drain tube to tubing that leads to a pump; and a pump for applying a negative pressure to the at least one drain tube and pumping precipitation from the windshield.

In a yet another aspect of the second main embodiment, the invention includes a vehicle including a system for wiping a windshield, the vehicle including: a windshield; and at least one windshield wiper including a housing with a blade mounted therein; at least one drain tube including a plurality of inlets; and a coupler for coupling the at least one drain tube to tubing that leads to a pump; and a pump for applying a negative pressure to the at least one drain tube and pumping precipitation from the windshield; wherein the at least one windshield wiper is mounted to the vehicle for providing wiping of precipitation from the windshield during operation of the vehicle.

### Brief Description of the drawings

The foregoing and other features and advantages of the invention are apparent from the following detailed description taken in conjunction with the accompanying drawings in which:

FIG. 1 is a perspective cross-sectional view of a windshield wiping system disclosed herein.

FIG. 2a is an underside perspective view of the integrated drain and squeegee configuration.

FIG. 2b is an underside perspective view of the deflected squeegee edge.

FIG. 3a is a side perspective view of the windshield wiper of FIG. 2a with end-pump fluidic connector.

FIG. 3b is a side perspective view of the windshield wiper of FIG. 2a with center-pump fluidic connector.

FIG. 4a is a system configuration illustration showing a dedicated pump for the left-side windshield wiper (L) and the right-side windshield wiper (R).

FIG. 4b is a system configuration illustration of both wipers sharing a single pump.

FIG. 5 provides a perspective view of a prior art windshield wiper.

FIG. 6 shows in perspective view various drain tube shapes.

FIG. 7 provides a perspective view of a prior art windshield wiper;

FIG. 8 is a perspective cutaway view of a windshield wiping system disclosed herein;

FIG. 9 is a side cutaway view of the windshield wiper of FIG. 2;

FIG. 10 is a perspective cutaway view of a collector included in the windshield wiper of FIG. 8;

FIG. 11 is a side cutaway view of another embodiment of the windshield wiper disclosed herein;

FIG. 12 is a perspective cutaway view of the windshield wiper of FIG. 5;

FIG. 13 is a perspective cutaway view of components included in the windshield wiping system;

FIG. 14 is a side cutaway view of the windshield wiper disclosed herein;

FIGS. 15, 16 and 17 are control diagrams for controlling the windshield wiper system; and

FIGS. 18, 19 and 20 are diagrams of additional embodiments of a connector for the windshield wiper.

### Description of the preferred embodiments

Disclosed herein, in a first main embodiment, are an expanded functionality and integration of a windshield wiper, windshield wiping system and methods for making use of the various components. Among other objectives, the teachings herein provide for efficiencies in fabrication not previously realized.

For example, the teachings herein provide for effective heating of a wiper blade on a windshield as well as active removal of excess water as may occur in intensive rain.

As an overview, the integrated windshield wiping system according to the teachings herein provides for active removal of precipitation deposited onto a windshield. The windshield wiper includes components for, among other things, pumping away the precipitation. In some embodiments, the windshield wiper (also referred to as the "wiper," or as a "squeegee") includes heating elements for actively heating during operation.

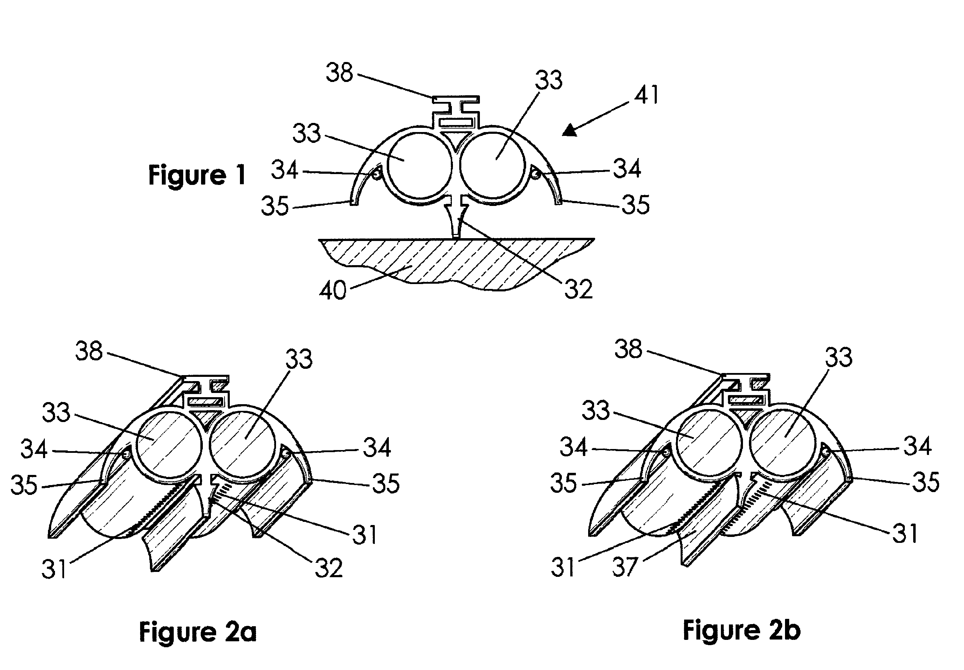

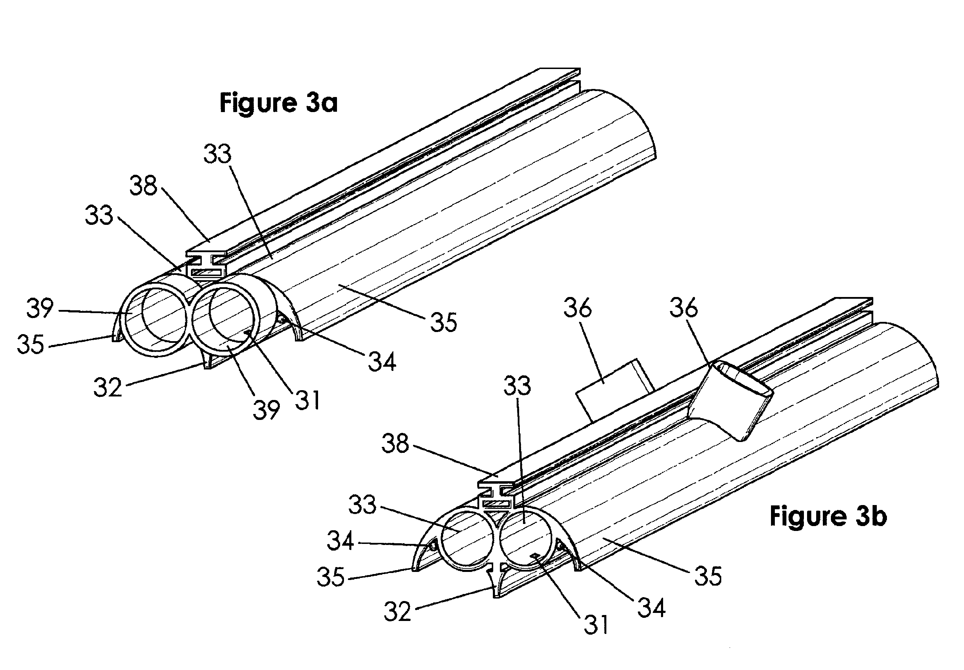

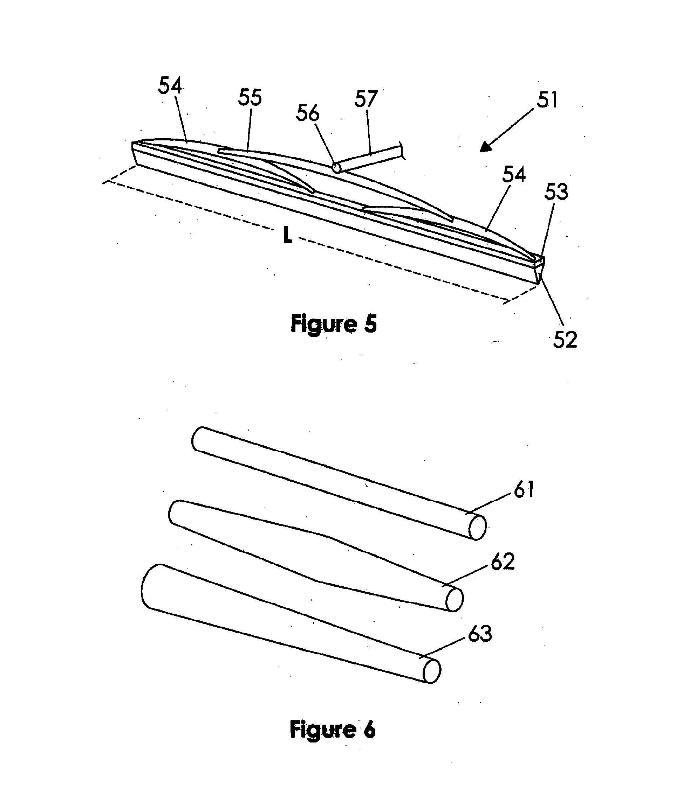

Referring now to FIG. 1, there is shown a cross-sectional view of an exemplary windshield wiper 41. In this example, the windshield wiper 41 includes drain conduits directly integrated into the body of the squeegee during fabrication. Exemplary components include the spine 38, at least one drain tube 33, and a squeegee 32 in contact with glass windshield surface 40. Generally, a coupler, shown in FIG.3a as element 39 for end-coupling, and in FIG.3b as element 36 for center-coupling, serves to provide fluidic connection to an external supply of positive or negative pressure, and may further provide for physical attachment of the windshield wiper 41 to the arm 57 shown in FIG 5. In some embodiments, the coupler is integrated into each of the at least one drain tube 33. For example, each drain tube 33 may include at least one of coupler 36 or coupler 39, where the coupler is inserted into the drain tube 33 or on one end (such as a lower end) of the drain tube 33.

In other embodiments, the coupler 36 may be a part of a connector for electrical and fluidic conduits. The connector may be any one of a variety of embodiments. In a preferred embodiment, the connector is an H-connector that provides for interconnection of two generally parallel drain tubes 33. Each of the drain tubes generally runs along the length, L, of the wiper blade. In some embodiments, the connector is disposed in approximately the center of the length, L. Advantageously, this provides for efficient pressure balancing of intake into each of the drain tubes 33. In embodiments involving other configurations of drain tubes 33, the connector may include other configurations. That is, for example, in an embodiment making use of a single drain tube 33, the connector may appear as an inverted "T" form or "Y" form. Additional embodiments of the connector are discussed further below.

The wiper may be coupled to the arm 57 using a prior art connecting device, or through some other form of connection. For example, a combination mechanical / fluidic connection may be used (such as with the coupler 39). In embodiments making use of a prior art connection to the arm 57, fluidic connection to the coupler 39 may be accomplished via tubing run internally through the arm 57.

The wiper is preferably a unitary structure, that is, functionally related structural elements formed in an optimum composite form-factor. Portions of the disclosed wiper may be formed in a single manufacturing process of a single material, such as extruded liquid silicone rubber, moulded or milled rubber, or a polymer with elastic and/or lubricating properties. The wiper may also be assembled from various parts (such as by bonding, gluing or welding). The wiper blade may be assembled from segmented parts, include at least one hinge (such as along the length, L) or include other similar devices. In short, known or later devised manufacturing techniques and apparatus may be used. In general, the wiper blade is fabricated so as to provide for desired rigidity and conformity with the windshield, as well as to provide an integrated structure for containing the components disclosed herein. In the non-limiting examples provided, the wiper blade is shaped to enable compatibility with existing wiper blade designs, known in the industry. These include the traditional armature type as shown in Fig. 5, as well as newer flat beam blade profiles.

The blade 32 can have a cross-section in a V shape, I-beam shape, have straight or curved sidewalls, or have simple or complex variations of these cross-sectional shapes.

It is known in the windshield wiper industry the necessity for the entire wiper blade to bend to the complex contour of the glass windshield to enable conformation of the squeegee edge and optimal contact of the silicone rubber to the glass surface. Gaps between wiper and glass result in smearing of water and related lowering of visibility. Steel "leaf spring(s)" in a flat beam blade may be pre-bent into a curve which flattens the wiper blade when mounted and is used to press the wiper against the glass windshield. Integrating the drains of the disclosure into the rubber body must address not adding rigidity which could interfere with conformity of the blade to the contoured glass windshield surface. The present disclosed wiper replaces existing squeegees having only a triangular pendulum wiping device with one or more integrated drains formed during extrusion (or milling) of the rubber squeegee, and keeps the triangular pendulum, enabling the pumping of a much higher volume of rain water than prior art designs - fluid capacity can be increased up to 10-100 times. Prior art wipers are known to fail at about 51 milliliters per wiper stroke, whereas the disclosed wiper can meet or exceed 500 milliliters per wiper stroke, handling rain fall rates, thus sustaining visibility for the driver of the vehicle.

The at least one drain tube 33 is disposed parallel to and along a length of the blade at a variable selected height above the glass windshield. As shown in Fig. 6, the drain tube is preferably cylindrical 61, but alternately may be conical 63 or bi-conical 62 about the center of the drain to linearize pressure drops down the drain-tube length, enabling a uniform pressure distribution. The distal end may be a smaller cross-sectional dimension than the proximal end - the conical shape 63 - for an end-pumping embodiment. The mid-point 'diameter' of the drain may be larger than both proximal and distal end-points, resulting in bi-conical shape 62, in the center-pumping embodiment, pre-compensating for pressure drops along the length of the drain-tube to assure uniform suction and associated nominal flowrates via the inlet apertures. The at least one drain tube 33 is, in cross-section, preferably circular, but may alternately be elliptical, rectangular, or variations of these geometric cross-sections. Means for internal structural support may be inserted into the drain channels to obviate potential inward motion of the channel walls under vacuum suction.

Referring now also to FIG. 3a and FIG. 3b, there is shown a cross-sectional view of an exemplary embodiment of the windshield wiper 41. The blade 38 is coupled to an armature by at least one mount. The mount may be integrated into the squeegee at the time of manufacture or added after manufacture. The mount may also be substantially of length, L. In other embodiments, a plurality of low-profile mounts (i.e., short in consideration of the length, L) may be included (e.g., three to five or so mounts). The at least one mount may rely on a variety of mounting techniques. For example, each mount may be a clip, a retainer or the like. More specifically, where the mount is a retainer, the mount may include an open profile into which the blade 38 is inserted (as shown in FIG. 3a and FIG. 3b). In these embodiments, the mount may rely on friction-fitting to ensure retention of the blade 38. In short, the mount provides for mounting of the blade 38 to the superstructure in a manner that provides for retention of the blade 38 as well as desired operational performance of the blade 38.

Referring now to FIGS. 2a and 2b, an underside of the wiper 41 is shown. In these examples, it may be seen that each of the drain tubes 33 includes at least one of couplers 36 or 39. Each of the couplers 36 or 39 is mated with a leg of the H-connector, T-connector or Y-connector. Each of the drains 33 generally includes a plurality of inlets 31 - shown in Figs. 2a and 2b - which face inward towards the squeegee sidewall. When the windshield wiper 41 is in operation (thus travelling back and forth), the wiper 41 lead the precipitation into the inlets 31. As will be discussed later herein, a negative pressure pulled on each of the drains 33 draws the precipitation into the inlets 31 of the drain tubes 33 and out through the coupler 36 or 39. However, for purposes of introduction, pumping may be controlled manually, in a dogmatic fashion (such as where it is adjusted according to another parameter, such as wiping speed), through computer control (such as with input from a rain sensor on board the vehicle ) or by other techniques deemed appropriate.

Generally, the bottom of each drain tube 33 is configured to be contiguous with the upper surface of the squeegee sidewall such that rain water is pushed or displaced by the squeegee edge in contact with the windshield glass 40 to drive the water upward into a directed or guided path from the glass windshield along the squeegee sidewall surface into the multiple inlet apertures in each drain tube. The contiguous rain flow path is enabled by the integration of the drain tubes into the body of the squeegee, as taught in the present disclosure. That is, the oscillatory motion of the squeegee 32 results in a maximum deflection angle defined as the auto-stop position which occurs at the end of the mechanical range of the squeegee motion where the base of the approximately inverted triangular squeegee contacts the planar surface directly above it, as shown in FIG.2b illustrating the case of sweeping to the right. Mirror image effects are seen when symmetrically sweeping to the left. In this end-of-range position, the bottom of the drain tube is effectively contiguous with the squeegee upper sidewall, providing alignment with the flow-guided rain for optimum rain water collection and removal by tube transport under pumping to an effluent location under the hood or an isolated location away from the windshield. The inlet 31 hole patterns may be linear, grouped, have variable spacings between inlet openings, have inlet openings with geometric cross-sections selected from square, circular, elliptical or other shapes, and have tapers or contours perpendicular to or at a selected angle of entry into the drain. The inlet hole sizes may be fixed, or may be stepped in gradient fashion in diameter , or have combinations of inlet hole size, inlet to inlet spacings, and have patterns selectable, all for water collection efficiency optimization.

The inlets along the drain are disposed at an angle to the glass windshield for optimum fluid collection efficiency, residing at the surface of the drain nearest to the squeegee sidewall. In the configurations taught in the present disclosure, the approximately upper-half of the drain channel is mechanically integrated and, hence mechanically supported, to mitigate against potential collapse of the channel during vacuum pumping. The approximately lower-half of the drain channel, 33, shown in FIG. 2b may be bonded with a ribbon or mesh of thinly insulated resistive wire, 34, such as Nichrome or other suitable conductors like carbon nanotubes, fibres, or co-extruded coatings applied to the exposed drain channel surface, and, provides mechanical support to mitigate against partial collapse of that section of the drain surface inward when vacuum pumping is applied, and serves as a heater. The heater may be formed by co-extruding with a lubricant elastomer a matrix carrier of electrically conducting particles or fibers to form a sub-surface layer functionally equivalent to a wire conductor with an insulator sheath.

This combination of integration and surface bonding of heater elements assures the mechanical integrity and utility of the drain channels,33, and inlets, 31, during dynamic pumping of fluids collected from the squeegee displacements, and reduces the thickness required for the drain walls. The positioning of the heater elements and the curvature of the tandem overhanging wings 35, as shown in Figs. 1-3b, enable a radiative heating zone analogous to the well-known effect of parabolic solar reflectors to focus radiated heat onto the squeegee sidewalls, the squeegee edge in contact with the glass windshield, and, concurrently to the fluid flowing within the drain channel. The wings 35 are preferably curved - in the cross-sectional view of Fig. 1 - with a concave inner surface, however they may also be other shapes such as straight extensions out from drains 33.

The drains 33 may optionally be reinforced, to prevent collapse of the sidewalls during pump suction, by inserting plastic or metal supports in a simple insertion assembly step not requiring bonding to a housing, in such a way that the inlets are not occluded, such as by using a longitudinal slit or slot overlaying the line of inlet openings 31. The drain walls are preferably about 1 mm thick. The inserts allow for connection of drain tube channels to the tubing to the pump.

Ice formation of impinging precipitation is thereby obviated by radiatively raising the air temperature and target wiping element surfaces above the freezing point. The hemi-cylinder surrounding the squeegee sidewalls and edge are preferably elevated to a temperature sufficient to obviate the freezing of incident precipitation. The method of radiant heating taught in the present disclosure, is advantageous with respect to alternative prior art methods wherein heater elements are embedded in tunnels of the thermally insulating rubber squeegee to conductively transfer heat to inhibit ice formation or to defrost existing ice, and, result in outgassing solvents important to the lifetime and mechanical elasticity of the rubber.

It is similarly pointed out that the present disclosure teaches an integrated squeegee structure which simplifies the manufacturing process by direct incorporation of the drains and elimination of drain parts inventory and additional assembly and bonding steps for drain attachment. Within the set of alternative embodiments for the present disclosure's design concepts of applying active vacuum suction into drain conduits is the direct incorporation of inlet openings in each of the sidewalls of the water pushing element 32 of Fig. 1.

In the examples shown, there are two heaters 34, each heater being disposed along an opposing side of the blade 41. As will be discussed in greater detail herein, each of the heaters 34 may be controlled manually, thermostatically or through other techniques deemed appropriate to switch on the heater at a predetermined set-point temperature or by a thermistor circuit allowing for adaptation to variable wind and temperature ambient conditions and controlled by a microprocessor or embedded controller.

In an alternative embodiment, a coaxial longitudinal annular opening is formed during extrusion about the drain channel, enabling a hollow or, alternately, solid, cylinder of resistive material to be formed to comprise a radiative heater. Ambient conditions of wind velocity, ambient temperature, amount of incident precipitation, and other variables will determine how many Watts will be required to defrost the wiper blade.

The windshield wiper 41 may include an arc or other shape. The shaping may be included to account for curvature of a particular windshield, enabling a surface compliant wiper, or flat beam-blade.

Having thus disclosed aspects of the windshield wiper 41, it should be recognized that a variety of additional embodiments may be had and other features may be provided. For example, independent operation of wipers may be desired. The windshield wiper 41 may be used to evenly dispense washer fluid, such as by reversing of pump action or reverse biasing of the pump motor, to provide positive rather than negative pressure. This would enable the windshield washer fluid out of what are otherwise drain inlets, longitudinally distributing the washer fluid along the wiper blade. Thus, the same apparatus can be used to both drain rain from the windshield and to dispense in a controlled locus washer fluid from a reservoir tank.

In some embodiments, at least one end of the drain tubes are closed, that is, has a sidewall that is orthogonally oriented to the sidewall.

In some embodiments, a secondary connector is provided. In these embodiments, the secondary connector may be coupled to another pump, thereby providing for auxiliary or redundant pumping.

In some embodiments, the coupler 36 or 39, the connector and the drain tube 33 are provided as a unitary structure (such as as a product of injection molding). In other embodiments, some of these components are combined.

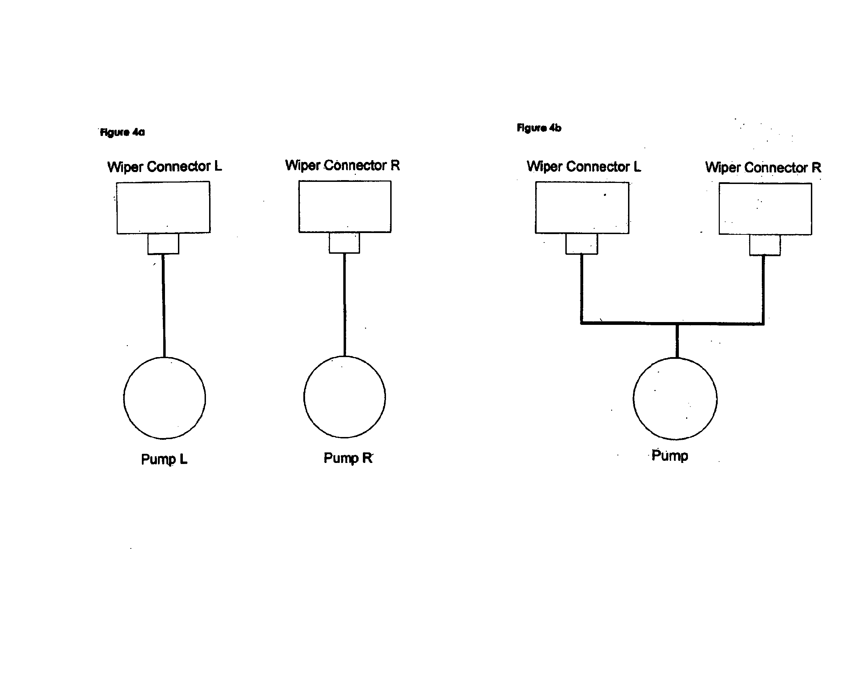

As shown in FIGS. 4a and 4b, various other components, such as left and right wiper connectors L and R and pumps L and R, may be included. These other components generally support the pumping action (redundant pumps may be included), and aspects of control of the windshield wiper 41. Among other things, the system that is provided with the windshield wiper may control parameters such as pump rates, direction of flow, wiper speed and the like. A control system may provide for automated operation, and may use a variety of sensors (such as a temperature sensor and a rain sensor) as control inputs. Each of the driver and passenger side windshield wipers may have a dedicated pump, as shown in Fig. 4a, or a shared pump, as in Fig. 4b, configured with directly connected couplers carrying tubing between each drain and a pump, or, via cross-coupled connecting couplers between each drain and each pump.

In summary, the teachings herein provide for an advanced windshield wiping system. The windshield wiping system provides for efficient wiping action with actively pumped rain removal not previously achieved by passive mechanical displacement wipers of prior art in a variety of inclement conditions.

It should be recognized that the windshield wiping system may be disposed upon any vehicle were visibility during inclement weather conditions is a concern. For example, the windshield wiping system may be installed in an automobile, a truck, a train, an airplane or a boat.

In support of the teachings herein, various additional components may be used that have not been specifically discussed herein. Components include, without limitation, types of pumps, sensors, heating systems, hoses, sources of pressure (negative and positive), valves and the like. Aspects of the windshield wiping system may be controlled by electronics including a digital system and/or an analog system. The system(s) may have components such as a processor, logic circuits, storage media, memory, input, output, communications link, user interfaces, software and firmware programs, signal processors (digital or analog) and other such components (such as resistors, capacitors, inductors and others) to provide for operation and analyses of the apparatus and methods disclosed herein in any of several manners well-appreciated in the art. It is considered that these teachings may be, but need not be, implemented in conjunction with a set of computer executable instructions stored on a computer readable medium, including memory (ROMs, RAMs), optical (CD-ROMs) or magnetic (disks, hard drives) storage devices, or any other type that when executed causes a computer to implement the method of the present disclosure. These instructions may provide for equipment operation, control, data collection and analysis and other functions deemed relevant by a system designer, owner, user or other such personnel, in addition to the functions described in this disclosure.

A controller for controlling at least one of a rate of pumping, heating and a speed of wiping, may include at least one microprocessor or microcontroller for the switch-on and operations of servocontrol of at least one of the following functions. One such function is varying the flow-rate as a function of voltage or current from an input sensor circuit, such as, but not limited to, a rain-sensor circuit. Another function is heater output power control, as measured for example in Wattage, to effect a desired ambient temperature under variable ambient conditions of air temperature, moisture content, wind velocity and others, to control the switching on of the heater and limiting the upper-value of wattage generated. Yet another function of the contoller is servocontrol of the interrelationships between a pair of windshield wipers on the driver's and on the passenger sides of the windshield, such as, but not limited to, relative pump rates, spatial positional phasing, wiper motor speed, roll-over to an at least 2nd pump in the event of a reliability failure of one of the pumps, augmentation of a first pump by a second pump to match rain-rate conditions, the cross-coupling of wipers on driver and passenger sides, and related requirements. Another controller function is reversal of pump flow direction, as for example, but not limited to, reverse bias of the voltage supply to the at least one pump, enabling 'flush out' for debris removal within the rain removal subsystem, or, switching from suction from drain inlet apertures to driving windshield washer fluid from a reservoir out the drain apertures for windscreen cleaning, either with the reversed suction pump or with a separate reservoir pump.

The various components that may be used to provide for functionality of the windshield wiping system may serve at least one other function. For example, computer executable instructions may be implemented by a processor provided for controlling other functions within a vehicle.

One skilled in the art will recognize that the various components or technologies may provide certain necessary or beneficial functionality or features. Accordingly, these functions and features as may be needed in support of the appended claims and variations thereof, are recognized as being inherently included as a part of the teachings herein and a part of the disclosure disclosed.

It should be recognized that relative terms such as "substantially" do not imply any particular limitations. For example, one element may be of a length, L, while other elements may be substantially of the length, L, and may therefore be longer, shorter or of an equal length. "Segmented" refers to, among other things, an article that is divisible (i.e., divided) into smaller components, which may exhibit some or all of the features of the larger article.

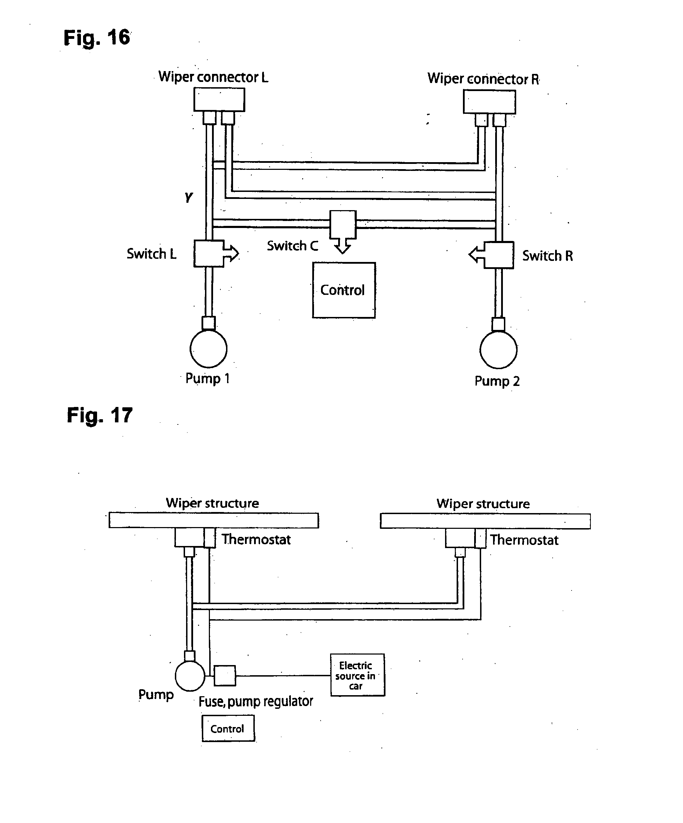

Disclosed herein, in a second main embodiment shown in Figs. 8-20, are an improved windshield wiper, windshield wiping system and methods for making use of the various components. Among other things, the teachings herein provide for efficiencies not previously realized. For example, the teachings herein provide for effective heating of an exterior surface of a windshield as well as active removal of excess water as may be realized in torrential rain.

As an overview, the windshield wiping system according to the teachings herein provides for active removal and control of precipitation deposited onto a windshield. The windshield wiper includes components for, among other things, pumping away the precipitation. In some embodiments, the windshield wiper (also referred to as the "wiper," or as a "squeegee") includes heating elements for actively heating during operation.

Referring now to FIG. 8, there is shown a cutaway view of an exemplary windshield wiper 10. In this example, the windshield wiper 10 includes a housing 15. The housing 15 is of a length, L, that is generally equivalent to the length, L, of a prior art windshield wiper 1. The housing 15 serves to include components of the windshield wiping system. Exemplary components included with the housing 15 include the blade 2, at least one drain tube 12, and a coupler 11. Generally, the coupler 11 serves to provide fluidic connection to an external supply of positive or negative pressure, and may further provide for physical attachment of the windshield wiper 10 to the arm 7. In some embodiments, the coupler 11 is integrated into each of the at least one drain tube 12. For example, each drain tube 12 may include the coupler 11, where the coupler 11 is disposed along a side of the drain tube 12 or on one end (such as a lower end) of the drain tube 12.

In other embodiments, the coupler 11 may be a part of a connector 16. The connector 16 may be any one of a variety of embodiments. In the embodiment shown, the connector 16 is an H-connector that provides for interconnection of two generally parallel drain tubes 12. Each of the drain tubes generally runs along the length, L, of the housing 15, with the blade 2 disposed between the two drain tubes 12. In the embodiment depicted, the housing 15 includes at least one additional grommet 14. Each of the grommets 14 are disposed along a wall of the housing 15 and provide for, among other things, protection of the windshield from scratching by the housing 15. Like some other components of the windshield wiper 10, the at least one grommet 14 may be continuous substantially along the length, L, or may be segmented along the length, L.

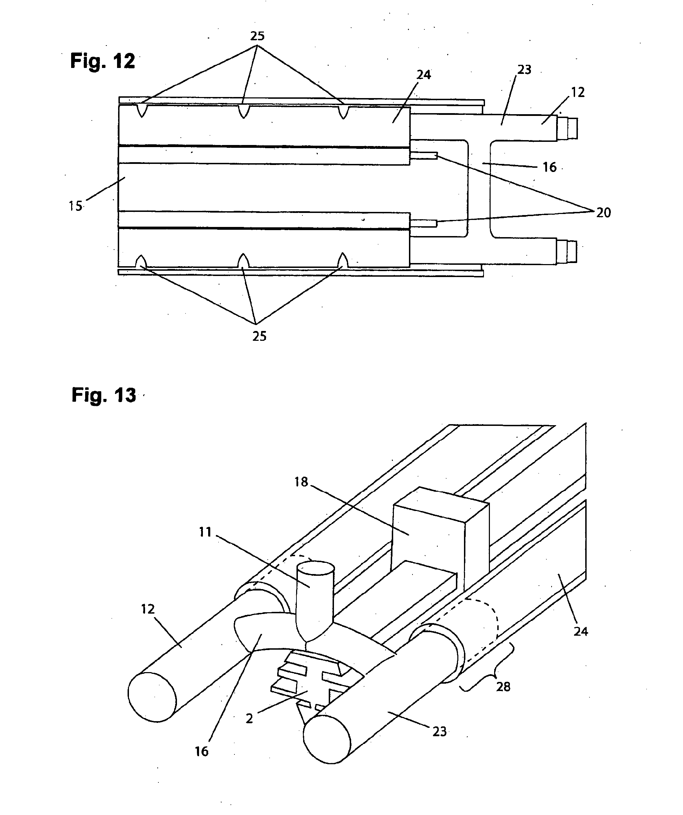

In some embodiments, the connector 16 is disposed in approximately the center of the length, L, of the housing 15. Advantageously, this provides for efficient balancing of intake into each of the drain tubes 12. In embodiments involving other configurations of drain tubes 12, the connector may include other configurations. That is, for example, in an embodiment making use of a single drain tube 12, the connector 16 may appear as an inverted "T" form. Additional embodiments of the connector 16 are illustrated in FIGS. 12-14, and discussed further below.

The housing 15 may be coupled to the arm 7 using a prior art connecting device, or through some other form of connection. For example, a combination mechanical / fluidic connection may be used (such as with the coupler 11). In embodiments making use of a prior art connection to the arm 7, fluidic connection to the coupler 11 may be accomplished via tubing run internally through the arm 7.

The housing 15 may be fabricated in any manner deemed suitable according to standards employed by a manufacturer, designer, user or other similar party. For example, the housing 15 may be a unitary structure, such as injection molded plastic, assembled from various parts (such as by gluing or welding). The housing 15 may be assembled from segmented parts, include at least one hinge (such as along the length, L) or include other similar devices. In short, known or later devised manufacturing techniques and apparatus may be used to provide for the housing 15. In general, the housing 15 is fabricated so as to provide for desired rigidity and conformity with the windshield, as well as to provide an integrated structure for containing the components disclosed herein.

In the non-limiting examples provided, the housing 15 is of a generally U-shaped cross section. However, the housing 15 may be of other embodiments, for example, the housing 15 may be of an inverted V-shape. Combinations of profiles (i.e., cross sections) may be used such that one form merges or transforms into another form when taking cross sectional views along the length, L.

Referring now also to FIG. 9, there is shown a cross-sectional view of an exemplary embodiment of the windshield wiper 10. In this example, the housing 15 is shown as generally being of an inverted "U" shape. The housing 15 includes the blade 2 which is substantially of the same length, L, as the housing 15. The blade 2 is coupled to the housing 15 by at least one mount 18. The mount 18 may be integrated into the housing 15 at the time of manufacture of the housing 15 or added after manufacture of the housing 15. The mount 18 may also be substantially of length, L. In other embodiments, a plurality of low-profile mounts 18 (i.e., short in consideration of the length, L) may be included (e.g., three to five or so mounts 18). The at least one mount 18 may rely on a variety of mounting techniques. For example, each mount 18 may be a clip, a retainer or the like. More specifically, where the mount 18 is a retainer, the mount 18 may include an open profile into which the blade 2 is inserted (as shown in FIG. 9). In these embodiments, the mount 18 may rely on friction-fitting to ensure retention of the blade 2. In short, the mount 18 provides for mounting of the blade 2 to the housing 15 in a manner that provides for retention of the blade 2 as well as desired operational performance of the blade 2.

As shown in FIG. 9, when the windshield wiper 10 is assembled and installed, the blade 2 contacts the windshield. Generally, a height of the blade 2 is such that the housing 15 is suspended above the windshield by some distance, D. Among other things, including an offset of distance, D, ensures adequate wiping action will occur. It is recognized that in practice the housing 15 may rotate slightly or that the blade 2 may compress (under certain conditions), thereby eliminating the offset on at least one side of the housing 15. Accordingly, the at least one grommet 14 ensures the windshield is not scratched by the housing 15, and may provide for additional wiping action. In embodiments where the grommet 14 is segmented (not shown), the grommet 14 (which is then actually a plurality of shortened grommets 14) provide for some wiping, scratch relief and some flow control where precipitation is directed into the housing 15 as the wiper 10 wipes. That is, for such embodiments, there may be an open space between each of the plurality of shortened grommets 14.

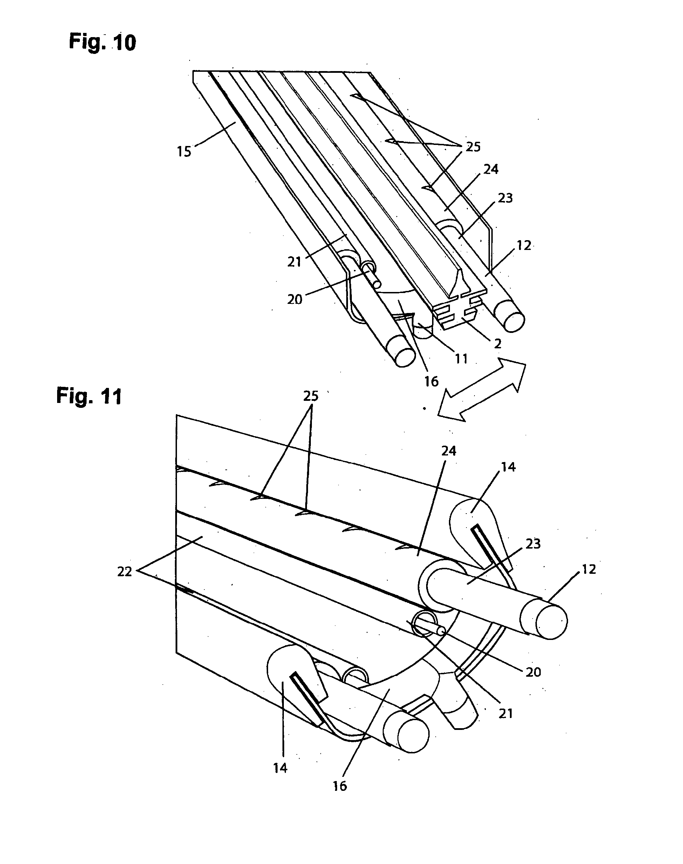

Referring now to FIGS. 10 and 11, an underside of the wiper 10 is shown. In these examples, it may be seen that each of the drain tubes 12 includes a pipe 24. Each of the pipe 24 is mated with a leg 23 of the H-connector. Each of the pipes 24 generally includes a plurality of inlets 25 which face an exterior wall of the housing 15 (i.e., are outward facing). When the windshield wiper 10 is in operation (thus travelling back and forth in directions indicated by the directional arrow), the outlets lead the wiper 10 into the precipitation. As will be discussed later herein, a negative pressure pulled on each of the pipes 24 draws the precipitation into the inlets 25 of the drain tubes 12 and out through the coupler 11. However, for purposes of introduction, pumping may be controlled manually, in a dogmatic fashion (such as where it is adjusted according to another parameter, such as wiping speed), through computer control (such as with input from a rain sensor on board the vehicle) or by other techniques deemed appropriate.

Generally, each drain tube 12 is surrounded by the pipe 24. In some embodiments, the drain tube 12 provides rigidity, while pipe 24 provides for improved siping action (i.e., may also wipe the precipitation, at least to an extent. For example, each of the drain tubes 12 may be fabricated from a rigid material, such as PVC, while each pipe 24 may be fabricated from a softer material, such as rubber, neoprene or the like.

The inlets 25 may be provided on an outer side of the pipe 24 / drain tube 12, as is generally shown. In other embodiments, the inlets 25 may be included on an inner side (such as near the blade 2). In some embodiments, the inlets 25 are manifested as a plurality of patterned perforations in the pipe 24 / drain tube 12. In general, the inlets 25 provide for fluidic communication (e.g., pick-up) along a length of the wiper 10, and the size, design and placement of the inlets 25 may accommodate this purpose (among others).

Note that FIGS. 10, 11 and 12 provide inverted views of the windshield wiper 10. In FIGS. 11 and 12, the blade 2 is omitted, merely for simplicity and to better illustrate other components.

Also shown in the embodiments of FIGS. 10 and 11 are heating elements. Specifically, in these embodiments, at least one resistive element 20 is disposed in sheathing 21 to provide for at least one heater 22 (i.e., a resistive heater). The sheathing 21 may be formed of at least one of insulation disposed around a commercially available resistive element and a tube for insertion of the resistive element 20. In the examples shown, there are two heaters 22, each heater 22 being disposed along an opposing side of the blade 2. As will be discussed in greater detail herein, each of the heaters 22 may be controlled manually, thermostatically or through other techniques deemed appropriate.

It should be noted that the at least one drain tube 12 and the at least one heater 22 are generally oriented within the housing 15 to provide for efficient functionality. That is, for example, each of the at least one drain tubes 12 is oriented in the housing 15 such that it is proximal to the windshield. In this manner, each of the inlets 25 is oriented to receive precipitation from a surface of the windshield.

Advantageously, use of the resistive element 20 within the housing 15 provides for effective radiative heating and efficiently melting frozen precipitation. That is, unlike prior art solutions where resistive elements are used, a substantial portion of the energy is directed to the precipitation, and is not lost in heating components of the (prior art) windshield wiper.

Other embodiments of the heater 22 may be used. For example, in another embodiment (not shown), the heater 22 makes use of hot air pumped (i.e., a forced hot air heater) to the sheathing 21 and distributed through a plurality of outlets. In this embodiment, the heating components are similar in construction to the components used for pumping away precipitation, with the exception being that the pumping provides a positive pressure.

Refer now to FIGS. 12 and 13, where additional cutaway views of the windshield wiper 10 are shown. In particular, note that FIG. 13 shows the mount 18 as a discrete retaining mount 18. Also, the leg 23 of the H-connector is mated with the pipe 24 in a mating region 28. Mating in the mating region 28 may rely simply on friction-fitting of the pipe 24 over the leg 23, or may include adhesive, glue, bonding or the like. In some embodiments, the H-connector and each of the pipes 24 are provided as a unitary component (thus, there is no mating region 28).

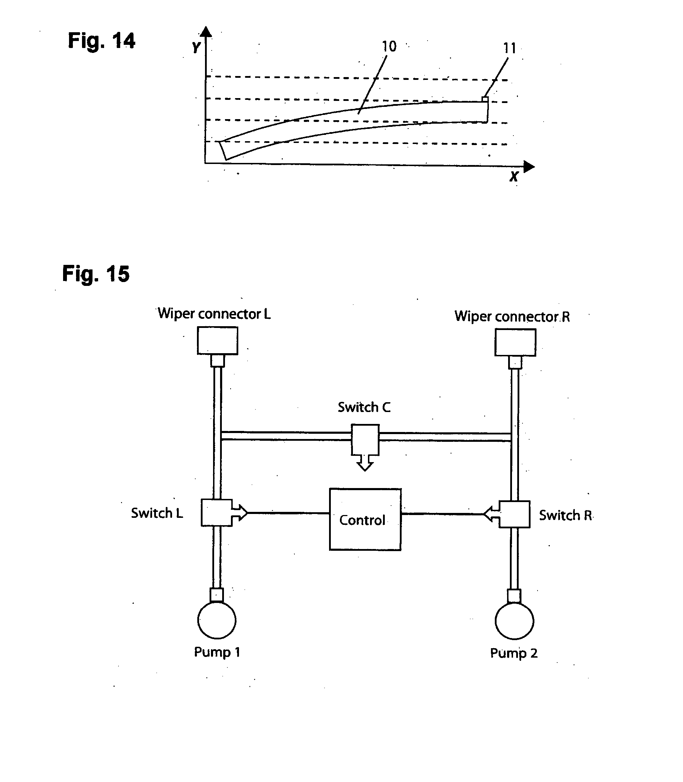

As shown in FIG. 14, the windshield wiper 10 may include an arc or other shape. The shaping may be included to account for curvature of a particular windshield.

Having thus disclosed aspects of the windshield wiper 10, it should be recognized that a variety of additional embodiments may be had and other features may be provided. For example, independent operation of wipers may be desired. The windshield wiper 10 may be used to evenly dispense washer fluid (such as by reversing of pump action).

In some embodiments, the mounts 18 include a suspension system such as is found in the prior art. More specifically, at least one primary armature 4 and often a secondary armature 5 may be included in the mount 18.

In some embodiments, at least one end of the housing 15 is closed (that is, has a sidewall that is orthogonally oriented to the sidewall upon which the grommet 14 is mounted).

In some embodiments, a secondary connector is provided. In these embodiments, the secondary connector may be coupled to another pump, thereby providing for auxiliary or redundant pumping.

In some embodiments, the coupler 11, the connector 16, the pipe 24 and the drain tube 12 are provided as a unitary structure (such as as a product of injection molding). In other embodiments, some of these components are combined (such as the drain tube 12 and the pipe 24).

As shown in FIGS. 15, 16 and 17, various other components may be included. These other components generally support the pumping action (redundant pumps may be included), and aspects of control of the windshield wiper 10. Among other things, the system that is provided with the windshield wiper may control parameters such. as pump rates, direction of flow, wiper speed and the like. A control system may provide for automated operation, and may use a variety of sensors (such as a temperature sensor and a rain sensor) as control inputs.

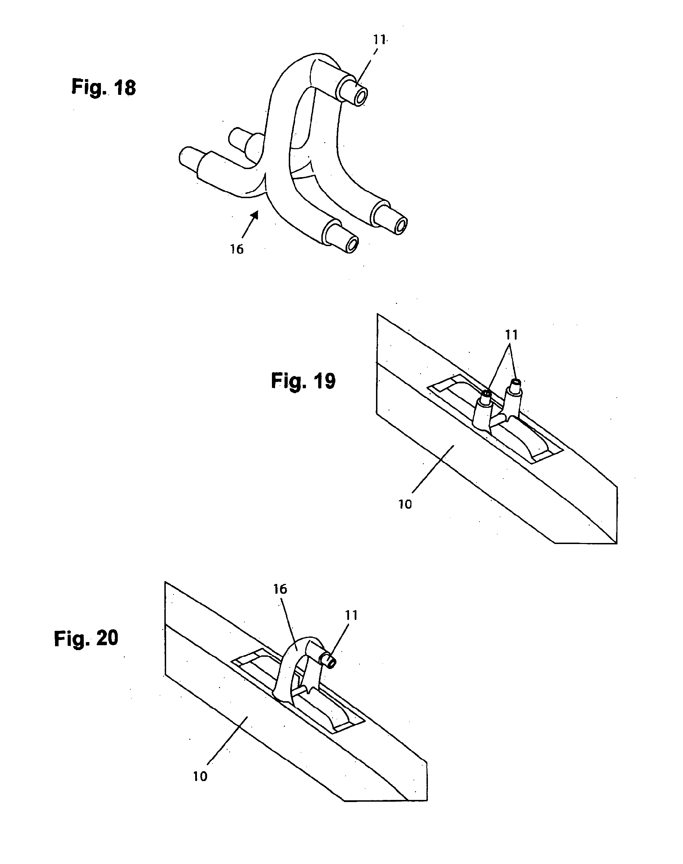

An additional embodiment of the connector 16 is depicted in FIGS. 18, 19 and 20. In FIG. 18, the connector 16 includes a flow design. That is, the flow design connector 16 includes curves and convergence points that are designed to encourage efficiency of flow from the drain tubes 12. In FIG. 19, the flow design connector 16 is shown partially installed in the windshield wiper 10, while in FIG. 20, the flow design connector 16 installation is completed.

In summary, the teachings herein provide for an advanced windshield wiping system. The windshield wiping system provides for efficient wiping action not previously achieved in a variety of inclement conditions.

It should be recognized that the windshield wiping system may be disposed upon any vehicle were visibility during inclement weather conditions is a concern. For example, the windshield wiping system may be installed in an automobile, a truck, a train, an airplane and a boat.

In support of the teachings herein, various additional components may be used that have not been specifically discussed herein. Components include, without limitation, types of pumps, sensors, heating systems, hoses, sources of pressure (negative and positive), valves and the like. Aspects of the windshield wiping system may be controlled by electronics including a digital system and/or an analog system. The system(s) may have components such as a processor, storage media, memory, input, output, communications link, user interfaces, software and firmware programs, signal processors (digital or analog) and other such components (such as resistors, capacitors, inductors and others) to provide for operation and analyses of the apparatus and methods disclosed herein in any of several manners well-appreciated in the art. It is considered that these teachings may be, but need not be, implemented in conjunction with a set of computer executable instructions stored on a computer readable medium, including memory (ROMs, RAMs), optical (CD-ROMs), or magnetic (disks, hard drives), or any other type that when executed causes a computer to implement the method of the present invention. These instructions may provide for equipment operation, control, data collection and analysis and other functions deemed relevant by a system designer, owner, user or other such personnel, in addition to the functions described in this disclosure.

The various components that may be used to provide for functionality of the windshield wiping system may serve at least one other function. For example, computer executable instructions may be implemented by a processor provided for controlling other functions within a vehicle.

One skilled in the art will recognize that the various components or technologies may provide certain necessary or beneficial functionality or features. Accordingly, these functions and features as may be needed in support of the appended claims and variations thereof, are recognized as being inherently included as a part of the teachings herein and a part of the invention disclosed.

It should be recognized that relative terms such as "substantially" do not imply any particular limitations. For example, one element may be of a length, L, while other elements may be substantially of the length, L, and may therefore be longer, shorter or of an equal length. "Segmented" refers to, among other things, an article that is divisible (i.e., divided) into smaller components, which may exhibit some or all of the features of the larger article.

While the disclosure has been described with reference to exemplary embodiments, it will be understood by those skilled in the art that various changes may be made and equivalents may be substituted for elements thereof without departing from the scope of the disclosure. In addition, many modifications will be appreciated by those skilled in the art to adapt a particular instrument, situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.
Various enumerated aspects of the present document are:

### Aspect 1.

A windshield wiper comprising:
a housing comprising a blade mounted therein;
at least one drain tube comprising a plurality of inlets; and
a coupler for coupling the at least one drain tube to tubing that leads to a pump.

### Aspect 2.

The windshield wiper as in aspect 1, further comprising at least one heater for providing heat within the housing.

### Aspect 3.

The windshield wiper as in aspect 2, wherein the heater comprises at least one of a resistive heater and a forced hot air heater.

### Aspect 4.

The windshield wiper as in aspect 1, wherein the housing comprises a cross section that is one of an inverted U shape and an inverted V shape.

### Aspect 5.

The windshield wiper as in aspect 1, wherein the at least one drain tube is disposed parallel to and along a length of the blade.

### Aspect 6.

The windshield wiper as in aspect 1, further comprising at least one grommet disposed on a sidewall of the housing.

### Aspect 7.

The windshield wiper as in aspect 6, wherein the at least one grommet is segmented along a length of the housing.

### Aspect 8.

The windshield wiper as in aspect 1, wherein a mount for retaining the blade comprises one of a suspension system and at least one mount coupled to the housing.

### Aspect 9.

A system for wiping a windshield, the system comprising:
at least one windshield wiper comprising a housing with a blade mounted therein;
at least one drain tube comprising a plurality of inlets; and a coupler for coupling the at least one drain tube to tubing that leads to a pump; and
a pump for applying a negative pressure to the at least one drain tube and pumping precipitation from the windshield.

### Aspect 10.

The system as in aspect 9, further comprising at least one heater for heating the precipitation.

### Aspect 11.

The system as in aspect 10, wherein the heater comprises at least one of a resistive heater and a forced hot air heater.

### Aspect 12.

The system as in aspect 10, further comprising a controller for controlling at least one of a rate of pumping, the heating and a speed of wiping.

### Aspect 13.

The system as in aspect 12, further comprising at least one of a rain sensor and a temperature sensor, each sensor adapted for providing input to the controller.

### Aspect 14.

The system as in aspect 9, adapted for operating a first one of the at least one windshield wipers independently of another windshield wiper.

### Aspect 15.

The system as in aspect 9 further comprising another pump for applying the negative pressure.

### Aspect 16.

The system as in aspect 9, wherein the pump may be reversed for supplying windshield wash to the at least one drain tube.

Aspect 17. A vehicle comprising a system for wiping a windshield, the vehicle comprising:
a windshield; and
at least one windshield wiper comprising a housing with a blade mounted therein;
   at least one drain tube comprising a plurality of inlets; and a coupler for coupling the at least one drain tube to tubing that leads to a pump; and a pump for applying a negative pressure to the at least one drain tube and pumping precipitation from the windshield;
wherein the at least one windshield wiper is mounted to the vehicle for providing wiping of precipitation from the windshield during operation of the vehicle.

### Aspect 18.

The vehicle as in aspect 17 comprising one of an automobile, a truck, a train, an airplane and a boat.

## Claims

1. A windshield wiper comprising:
- a blade having a length;
- at least one drain having a plurality of inlets, said at least one drain formed adjacent to said blade and to said length; and
- a spine adjacent to said at least one drain;
wherein said blade, said at least one drain, and said spine are a unitary structure.

2. The windshield wiper of claim 1, further comprising at least one heater for providing heat within a hemi-cylinder surrounding the blade sidewalls and edge, capable of being elevated to a temperature sufficient to obviate the freezing of incident precipitation.

3. The windshield wiper of claim 2, wherein said hemi-cylinder further comprises at least one wing adjacent to said heater, and said hemi-cylinder focuses radiated heat onto the sidewalls of said blade, and onto an edge of said blade in contact with a glass windshield, and concurrently onto the fluid flowing into and through said drain.

4. The windshield wiper of claim 1, further comprising a coupler for coupling the at least one drain to tubing that leads to a pump.

5. The windshield wiper of claim 1, wherein the blade cross-section is a V shape, I-beam shape, have straight or curved sidewalls, or simple or complex variations of said cross-sectional shapes.

6. The windshield wiper of claim 1, wherein the at least one drain is one of the following:
at least one drain disposed parallel to and along the length of the blade, at a selected height above a glass windshield; or
at least one drain comprising two drains arranged side-by-side, centered above said blade and below said spine; or at least one drain being conical, or bi-conical about the center of the drain, to linearize pressure drops along the length of the drain.

7. The windshield wiper of claim 1, wherein said inlets are among the following:
- inlets allowing for a passage of water into said drain; or - inlets being linear or grouped, and having constant or variable spacings between said inlets, being of constant or variable size, and wherein the cross-sectional shape of said inlet opening comprise square, circular, or elliptical; or .
- inlets having tapers or contours perpendicular to or at a selected angle of entry into the drain, and are fixed or stepped in gradient fashion in diameter.

8. The windshield wiper of Claim 1, further comprising a coupler between the at least one drain and tubing to at least one pump, wherein said coupler is selected among the followings:
- a coupler positioned at a mid-point of the drain, with both ends of said drain capped; or a coupler being positioned at an end-point of the drain, with an opposite end of said drain capped; or a coupler between the at least one drain and tubing to at least one pump, wherein said tubing removes effluent either to a vehicle drain system or under a vehicle hood.

9. The windshield wiper of Claim 1, configured with a second such windshield wiper on a vehicle, wherein each wiper has a dedicated pump or wherein both wipers share a pump.

10. The windshield wiper of claim 1, wherein a mount for retaining the wiper comprises one of a suspension system for legacy armatures, or for flat beam-blades.

11. The windshield wiper of claim 4, wherein said pump is capable of applying a negative pressure to the at least one drain and pumping precipitation from the drain via said tubing and said inlets.

12. The windshield wiper of claim 11, wherein said pump is capable of being reversed, in order to supply windshield washing fluid through the at least one drain to a windshield surface.

13. The windshield wiper of claim1 wherein the bottom of each said drain is configured to be contiguous with an upper surface of the blade sidewall, such that during operation rain water is pushed by the blade edge in contact with a windshield to drive the rain water upward into said inlets in each said drain.

14. The windshield wiper of claim 2 wherein said heater is selected among the followings:
- a heater comprising a ribbon or mesh of thinly insulated resistive wire, wherein said wire is nichrome, or carbon nanotubes or fibers; or a heater being bonded to at least one said drain, and providing mechanical support to said drain during drain pumping.

15. A system for removing precipitation from a windshield, comprising:
- a windshield wiper comprising:
- a blade having a length;
- at least one drain having a plurality of inlets, said at least one drain formed adjacent to said blade and to said length;
- a spine adjacent to said at least one drain;
wherein said blade, said at least one drain, and said spine are a unitary structure; said windshield wiper mounted on a wiper arm;
- at least one coupler for coupling the at least one drain to tubing that leads to at least one pump that is capable of applying a negative pressure to the at least one drain and pumping said precipitation from the drain via said tubing.

16. The system of claim 15, further comprising at least one heater adjacent to said at least one drain, at least one pump connected via tubing to said at least one drain, and at least one of a rain sensor and a temperature sensor.

17. The system of claim 16, further comprising a controller for controlling at least one of a rate of pumping, the heating and a speed of wiping, comprised of at least one microprocessor or microcontroller, wherein said controller varies a pump flow rate based on input from said rain sensor.

18. The system of claim 17 wherein said controller controls a switching on/off of said heater, to effect a desired ambient temperature under variable ambient conditions of air temperature, moisture content, wind velocity and others.

19. The system of claim 17 wherein said system comprises a pair of windshield wipers and controls pump rates at each of said windshield wipers, spatial positional phasing, wiper motor speed, roll-over to an at least second pump in the event of a reliability failure of a first pump, and augmentation of a first pump by a second pump to match rain-rate conditions.

20. The system of claim 17 wherein said controller is capable of reversing pump flow direction, enabling a flushing out of debris removal within said system, or driving windshield washer fluid from a reservoir for windshield cleaning.

21. The system of claim 20 wherein said reversing of pump flow direction is with either a reversed suction pump or with a separate reservoir pump.

22. The system of claim 16 wherein said at least one pump has a push or a pull type of driving mechanism, with a column of air with positive pressure, or, a negative pressure.

23. The system of claim 16, further comprising at least one heater, e.g. comprising a resistive heater, for providing heat within a hemi-cylinder surrounding the blade sidewalls and edge, capable of being elevated to a temperature sufficient to obviate the freezing of incident precipitation.

24. The system of claim 23, wherein said hemi-cylinder further comprises at least one wing adjacent to said heater, and said hemi-cylinder focuses radiated heat onto the sidewalls of said blade, and onto an edge of said blade in contact with a glass windshield, and concurrently onto the fluid flowing into and through said drain.

25. The system of claim 16, further comprising a coupler for coupling the at least one drain to tubing that leads to a pump.

26. The system of claim 16, wherein the blade cross-section is a V shape, I-beam shape, have straight or curved sidewalls, or simple or complex variations of said cross-sectional shapes.

27. The system of claim 16, wherein the at least one drain is selected among the followings:
at least one drain disposed parallel to and along the length of the blade, at a selected height above a glass windshield; or at least one drain comprising two drains arranged side-by-side, centered above said blade and below said spine; or
at least one drain being conical, or bi-conical about the center of the drain, to linearize pressure drops along the length of the drain.

28. The system of claim 16, wherein said inlets are selected among the followings:
- inlets allowing for a passage of water into said drain; or inlets being linear or grouped, and having constant or variable spacings between said inlets, being of constant or variable size, and wherein the cross-sectional shape of said inlet opening comprise square, circular, or elliptical; or .
- inlets having tapers or contours perpendicular to or at a selected angle of entry into the drain, and being fixed or stepped in gradient fashion in diameter.

29. The system of claim 16, further comprising a coupler selected among the followings:
- a coupler between the at least one drain and tubing to at least one pump, wherein said coupler is positioned at a mid-point of the drain, with both ends of said drain capped; or a coupler between the at least one drain and tubing to at least one pump, wherein said coupler is positioned at an end-point of the drain, with an opposite end of said drain capped; or a coupler between the at least one drain and tubing to at least one pump, wherein said tubing removes effluent either to a vehicle drain system or under a vehicle hood.

30. The system of claim 16, configured with a second such windshield wiper on a vehicle, wherein each wiper has a dedicated pump or wherein both wipers share a pump.

31. The system of claim 16, wherein a mount for retaining the wiper comprises one of a suspension system for legacy armatures, or for flat beam-blades.

32. The windshield wiper of claim 16, wherein said pump is capable of applying a negative pressure to the at least one drain and pumping precipitation from the drain via said tubing and said inlets; or is capable of being reversed, in order to supply windshield washing fluid through the at least one drain to a windshield surface.

33. The system of claim 16 wherein the bottom of each said drain is configured to be contiguous with an upper surface of the blade sidewall, such that during operation rain water is pushed by the blade edge in contact with a windshield to drive the rain water upward into said inlets in each said drain.

34. The system of claim 23 wherein said heater is selected among the followings:
- a heater comprising a ribbon or mesh of thinly insulated resistive wire, wherein said wire is nichrome, or carbon nanotubes or fibers; or a heater bonded to at least one said drain, and provides mechanical support to said drain during drain pumping.

35. The system of claim 17 wherein said controller is capable of dynamically pumping said precipitation with an adaptive flow rate proportional to the intensity of said precipitation.

36. The system of claim 16 wherein said said heater is capable of being controlled manually by a user of said system, or thermostatically by said controller at a predetermined set-point temperature, or by said controller using a thermistor circuit.

37. A vehicle comprising a rain removal system for wiping a windshield, the vehicle comprising:
- a windshield; and
- a windshield wiper comprising:
- a blade having a length;
- at least one drain having a plurality of inlets, said at least one drain formed adjacent to said blade and to said length;
- a spine adjacent to said at least one drain;
wherein said blade, said at least one drain, and said spine are a unitary structure;
- said windshield wiper mounted on a wiper arm;
- at least one coupler for coupling the at least one drain to tubing that leads to at least one pump that is capable of applying a negative pressure to the at least one drain and pumping said precipitation from the windshield;
wherein the windshield wiper is mounted to the vehicle for providing wiping of precipitation from the windshield during operation of the vehicle, .

38. The vehicle of claim 37 comprising one of an automobile, a truck, a train, an airplane or a boat.

39. A method of manufacturing windshield wiper comprising:
- forming a blade having a length;
- forming at least one drain having a plurality of inlets, said at least one drain formed adjacent to said blade and to said length; and
wherein said blade and said at least one drain are formed in a single manufacturing step of a single material.

40. The method of claim 39 wherein said single manufacturing step comprises extrusion, moulding or milling: and/or wherein said single material is silicone rubber, rubber, or a polymer.

41. The method of claim 39 further comprising forming at least one heater adjacent to said drain.

42. The method of claim 41 wherein forming said heater comprises co-extruding with a lubricant elastomer a matrix carrier of electrically conducting particles or fibers to form a sub-surface layer functionally equivalent to a wire conductor with an insulator sheath.

43. The method of claim 41 wherein said heater comprises nichrome, carbon nanotubes or fibers.

44. The method of claim 39 wherein said heater is attached to said drain by bonding.

45. The windshield wiper of claim 1 further comprising a slotted support having a longitudinal slit overlaying the inlet openings, and interior to said drain.
